# FASCICULE DE BREVET EUROPEEN

(11) **EP 0 905 211 B1**
(45) Date de publication et mention de la délivrance du brevet: **19.05.2004**
(21) Numéro de dépôt: 98402248.3
(22) Date de dépôt: 11.09.1998
(51) Int. Cl.: C09J 153/02, C09J 123/08

(54) **Adhésif sensible à la pression et applicable à chaud**
Drucksensitiver Schmelzkleber
Hot melt pressure sensitive adhesive

(30) Priorité: 30.09.1997 FR 9712136
(43) Date de publication de la demande: 31.03.1999
(73) Titulaire: Atofina, 92800 Puteaux (FR)
(72) Inventeur: Radigon, Eric, 27300 Bernay (FR); Pierrot, Jean-Michel, 27170 Grosley Sur Risle (FR); Lebez, Jean, 27000 Evreux (FR)
(74) Mandataire: Neel, Henry

(56) Documents cités:
- EP-A- 0 298 319
- EP-A- 0 664 327
- WO-A-95/13332
- WO-A-95/30721
- GB-A- 2 223 023
- GB-A- 2 290 298
- US-A- 4 745 139

## Description

La présente invention concerne un adhésif sensible à la pression et applicable à chaud.

Les colles (adhésifs) thermofusibles sont des matériaux thermoplastiques solides à la température ambiante et qui par chauffage deviennent des liquides visqueux. Ces liquides visqueux sont appliqués sur un premier substrat puis on le couvre avec une seconde surface. Par refroidissement, on obtient une adhérence entre le substrat et la deuxième surface. Le temps ouvert est la période pendant laquelle la colle qui a été appliquée sur un substrat qui est à la température ambiante reste collante, c'est-à-dire l'intervalle de temps pendant lequel on peut appliquer la seconde surface et par refroidissement obtenir une adhérence entre le substrat et la seconde surface.

Passé ce délai du temps ouvert on ne peut plus obtenir une adhérence suffisante entre le substrat et la seconde surface.

Ces colles sont désignées par l'abréviation HMA (hot melt adhesives). Les adhésifs ayant un temps ouvert infini sont utiles pour les étiquettes autocollantes ou le ruban adhésif qu'on utilise à température ambiante. Selon la nature de l'adhésif on peut obtenir des adhérences plus ou moins fortes et par exemple décoller et recoller l'étiquette. Le collage s'effectue par pression à température ambiante. L'adhésif est déposé sur le substrat (par exemple étiquette ou ruban) à chaud. Ces adhésifs sont désignés par HMPSA (hot melt pressure sensitive adhesive). La présente invention concerne ce type d'adhésifs. Ils sont aussi désignés parfois comme des compositions thermofusibles auto-adhésives.

Selon l'art antérieur, voir par exemple ULLMANN'S ENCYCLOPEDIA OF INDUSTRIAL CHEMISTRY, 5e édition (1995) Vol A 26 p. 659-660, les HMPSA sont de préférence à base de copolymères blocs SIS (styrène-isoprène-styrène) ou SBS (styrène-butadiène-styrène).

Dans le brevet US 5373041 concernant les HMPSA on a cité comme inconvénients des SBS et SIS leur instabilité à chaud et aux rayons U.V. ainsi que leur mauvaise résistance aux huiles. Il a donc été proposé dans ce brevet de remplacer les SBS et SIS par des copolymères constitués de 60 à 70 % (en poids) d'éthylène, 30 à 40 % d'acrylate de n-butyle et de 0 à 5 % d'acide (méth)acrylique pouvant être neutralisé par des ions métalliques.

On a maintenant découvert que des mélanges de copolymères blocs SBS ou SIS et de copolymères éthylène-(méth)acrylate d'alkyle permettaient de préparer des adhésifs HMPSA avec des propriétés qu'on pouvait choisir dans une grande plage de valeurs.

L'avantage des adhésifs de l'invention est que l'on peut en choisissant les proportions de copolymère bloc déterminer le type de rupture entre le substrat et la seconde surface.

Un autre avantage de l'invention est que le copolymère bloc (SBS ou SIS) apporte une rupture adhésive et un bon tack au doigt alors que le copolymère d'éthylène et de (méth)acrylate d'alkyle apporte une bonne tenue au fluage et une meilleure adhérence sur l'acier que le copolymère bloc.

L'art antérieur US 5401792 a déjà décrit des HMA contenant ces copolymères blocs SBS ou SIS, des copolymères éthylène-(méth)acrylate d'alkyle et une résine tackifiante. Ces HMA sont particulièrement choisis quand on doit déposer le HMA sur un substrat par projection sous forme de fibres en fusion. Le temps ouvert est entre 10 et 180 secondes selon les compositions. Ces compositions ne sont pas des HMPSA.

La présente invention est donc un adhésif sensible à la pression comprenant :
· un mélange d'un copolymère bloc (A) comprenant des blocs polystyrène et des blocs polybutadiène ou polyisoprène éventuellement hydrogénés et d'un copolymère (B) de l'éthylène et d'un (méth)acrylate d'alkyle,
· une résine tackifiante et
· un plastifiant, caractérisé en ce que ledit plastifiant est choisi parmi les huiles minérales paraffiniques aromatiques ou naphtériques.

Ces adhésifs sont déposés à chaud (en fusion)-sur un substrat tel que par exemple un ruban en papier, en polyamide, polyoléfine, polyester. Par refroidissement on obtient une face adhésive à température ambiante. Cette face adhésive peut être protégée avant son usage par un papier siliconé ou l'autre face du substrat (enroulement d'un ruban adhésif sur lui-même).

Les copolymères blocs (A) sont décrits dans ULLMANN'S déjà cité plus haut Vol A 26, pages 655 - 659. Avantageusement ce sont des copolymères de formule C-D-C ou de formule 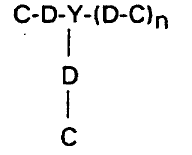 dans laquelle n vaut 1, 2 ou 3 et C et D représentent des blocs. Les blocs C représentent du styrène polymérisé et les blocs D du butadiène polymérisé, de l'isoprène polymérisé ou un mélange de butadiène et d'isoprène polymérisé. Les blocs D peuvent être hydrogénés (il s'agit alors par exemple des SEBS).

Y est une entité polyfonctionnelle provenant par exemple d'agents de couplage polyfonctionnels qu'on utilise dans la fabrication des copolymères blocs en étoile. De tels agents ainsi que ces copolymères blocs sont décrits dans US 3639521 dont le contenu est incorporé dans la présente demande.

Des copolymères blocs en étoile préférés contiennent 15 à 45 % en poids et mieux 25 à 35 % de motifs styrène. La masse molaire est d'au moins 140 000 et mieux d'au moins 160 000.

Des polymères blocs en étoile particulièrement préférés sont ceux décrits dans EP 451920. Ces copolymères sont à base de styrène et d'isoprène, la masse molaire des blocs polystyrène est d'au moins 12000 et la teneur en polystyrène est de 35 % (poids) au plus de la masse totale du copolymère bloc.

Les copolymères blocs linéaires préférés ont une masse molaire entre 70000 et 145000 et contiennent 12 à 35 % en poids de polystyrène. Des copolymères blocs linéaires blocs particulièrement préférés sont ceux à base de styrène et d'isoprène décrits dans le brevet européen EP 451919. Ces copolymères ont des blocs polystyrène de masse molaire entre 14000 et 16000 et une teneur en polystyrène comprise entre 25 et 35 % en poids du copolymère bloc. La masse molaire est entre 80000 et 145000 et mieux entre 100000 et 145000.

Quant aux copolymères (B) à titre d'exemples de (méth)acrylates d'alkyle, on peut citer ceux dont le groupe alkyle a de 1 à 10 atomes de carbone tels que le (méth)acrylate de méthyle, le (méth)acrylate d'éthyle, le (méth)acrylate de n-butyle, le (méth)acrylate d'isobutyle et le (méth)acrylate de 2-éthyl-héxyle. On utilise avantageusement l'acrylate de n-butyle.

La teneur en (méth)acrylate est avantageusement d'au plus 50 % et de préférence comprise entre 20 et 40 % en poids. L'indice de fluidité à l'état fondu (ou MFI) peut être compris entre 0,1 et 1000 et est avantageusement d'au moins 40 et de préférence entre 40 et 400 (en g/10 mn selon ASTM D 1238-73 conditions E).

Quand on augmente la proportion de (A) par rapport à (B) on augment le tack au doigt et dans le test du tack à la boucle on passe d'une rupture mixte adhésive à une rupture adhésive.

Le test du tack à la boucle (loop tack) est le test FINAT FTM 9 décrit dans le manuel technique FINAT, Laan Copes Van Cattenbubch 79 NL 2585 EW LA HAYE (1995).

Ce test caractérise l'adhésion instantanée ou "tack". Le tack est défini comme étant la force requise pour décoller une boucle de PET (Polyéthylène terephtalate) enduite de HMPSA, dont une surface déterminée a été préalablement mise en contact avec une plaque d'acier inoxydable.

Le HMPSA est enduit entre 140 et 180°C sur une bande de PET de 25 x 400 mm². L'épaisseur étant constante, le grammage est compris entre 18 et 22 g/m². Les bandes à tester doivent être conditionnées au moins 4 heures avant l'essai dans une pièce climatisée à (23 ± 2) °C, (50 ± 5)% HR (humidité relative). Le ruban auto-adhésif est appliqué à l'aide d'un rouleau standard normalisé de 2 kg.

Le test est effectué à l'aide d'un dynamomètre, à une vitesse de 300 mm/min dans une pièce climatisée à (23 ± 2)°C, (50 ± 5)% HR.

Le loop-tack est quantifié par la valeur de force maximum. Le résultat du test de fluage est donné en N/cm. Le type de rupture doit être mentionné.

Les différents types de rupture sont définis comme suit :
***Rupture adhésive***
   Le HMPSA n'adhère pas sur un des 2 substrats.
***Rupture cohésive***
   On observe une rupture dans le joint de colle. Dans ce cas les deux substrats encollés entraînent une partie du joint lors de la traction.
***Rupture mixte***
   La rupture est indécise et on peut observer sur une même éprouvette les deux types de ruptures décrits plus haut.

Quand au augmente la proportion de (B) on augmente la tenue au fluage ainsi que l'adhérence sur l'acier.

La tenue au fluage est déterminée par le test FTM 8 (Manuel FINAT déjà cité).

Le test de fluage mesure la capacité d'un HMPSA à résister à une force statique de1 kgf à une température donnée.

La résistance au cisaillement statique est définie par le temps nécessaire pour séparer par glissement vertical parallèle une aire de 25 x 25 mm² enduite de HMPSA, d'une plaque d'acier inoxydable plane.

Le HMPSA est enduit entre 140 et 180°C sur une bande de PET de 25 x 400 mm². L'épaisseur étant constante, le grammage est compris entre 18 et 22 g/m². Les bandes à tester doivent être conditionnées au moins 4 heures avant l'essai dans une pièce climatisée à (23 ± 2)°C, (50 ± 5)% HR. Le ruban auto-adhésif est appliqué à l'aide d'un rouleau standard normalisé de 2 kg.

Le résultat du test de fluage est donné en minutes. Le type de rupture doit être mentionné.

L'adhérence sur l'acier est déterminée par le test FTM1 (Manuel FINAT déjà cité).

Ce test quantifie le pouvoir adhésif. Ce dernier est défini comme étant la force requise pour enlever une bande de PET enduite de HMPSA d'une plaque d'acier inoxydable.

Le HMPSA est enduit entre 140 et 180°C sur une bande de PET de 25 x 400 mm². L'épaisseur étant constante, le grammage est compris entre 18 et 22 g/m². Les bandes à tester doivent être conditionnées au moins 4 heures avant l'essai dans un pièce climatisée à (23 ± 2)°C, (50 ± 5)% HR. Le ruban auto-adhésif est appliqué à l'aide d'un rouleau standard normalisé de 2 kg.

La force d'adhésion est mesurée 20 minutes après application. Le test est effectué à l'aide d'un dynamomètre, sous un angle de 180°, à une vitesse de 300 mm/min dans une pièce climatisée à (23 ± 2)°C, (50 ± 5)% HR.

Le résultat du test de pelage est donné en N/cm. Le type de rupture doit être mentionné.

Les adhésifs de l'invention contiennent une ou plusieurs résines tackifiantes et éventuellement des plastifiants, des charges et des stabilisants.

Des résines tackifiantes qui conviennent, sont par exemple la colophane, les esters de colophane, la colophane hydrogénée, les polyterpènes et dérivés, les résines de pétrole aromatiques ou aliphatiques, les résines cycliques hydrogénées. Ces résines ont typiquement une température de ramollissement bille anneau entre 25°C et 180°C et de préférence entre 50°C et 135°C.

La quantité de résine tackifiante peut être de 50 à 180 parties pour 100 parties du mélange de (A) et (B) et de préférence 100 à 150 parties.

D'autres exemples de dérivés de colophane sont décrits dans ULLMAN'S (cité plus haut) Vol A 23 p. 79 - 86, le contenu étant incorporé dans la présente demande.

A titre de dérivés de la colophane on peut citer ceux obtenus par hydrogénation, deshydrogénation, polymérisation, estérification. Ces dérivés peuvent être utilisés tels quels ou sous forme d'esters de polyols tels que les esters de pentaerythritol, polyéthylène glycol et glycérol.

A titre de résine tackifiante on peut encore citer les dicyclopentadiènes.

Les plastifiants que l'on utilise dans les adhésifs de l'invention sont des huiles minérales paraffiniques aromatiques ou naphténiques. Ils servent essentiellement à baisser la viscosité et à apporter du tack. La quantité de plastifiant peut être comprise entre 10 et 30 parties pour 100 parties du mélange de (A) et (B).

A titre de plastifiant on peut encore citer les phtalates, azelates, adipates, le phosphate de tricresyl et les polyesters.

A titre d'exemples de charges, on peut citer la silice, l'alumine, le verre, les billes de verre, les carbonates de calcium, les fibres, et hydroxydes métalliques. Ces charges ne doivent pas réduire le tack ni les propriétés mécaniques de la colle après son application. La quantité de charges peut représenter jusqu'à 100 parties pour 100 parties du mélange de (A) et (B).

Il est recommandé d'ajouter des stabilisants tels que les antioxydants, on peut utiliser les antioxydants habituels des thermoplastiques.

Les colles thermofusibles de l'invention sont préparées par mélange à l'état fondu à des températures entre 130°C et 200°C jusqu'à ce qu'on obtienne un mélange homogène. La durée de mélange peut être de l'ordre de 30 minutes à 3 heures. On peut utiliser les dispositifs habituels des thermoplastiques tels que des extrudeuses, des cylindres, des mélangeurs Banbury ou Brabender, ou des mélangeurs à hélice.

Il est recommandé d'opérer sous azote ; en effet les copolymères (A) sont très sensibles à l'oxydation même si ils sont protégés par des antioxydants phenoliques du type IRGANOX (produit CIBA SPECIALITY CHEMICALS).

### Exemples

Dans les exemples on mesure les propriétés des adhésifs selon les méthodes suivantes :

### Point de trouble :

Le point de trouble est déterminé comme suit : on chauffe la colle à 175°C et on en dépose une goutte sur le bulbe d'un thermomètre ASTM puis on note la température à laquelle le trouble apparaît au cours du refroidissement.

### Viscosité Brookfield :

Mesurée à 170°C, aiguille 27 à 10 tours/minute selon ASTM D 3236.

### Pelage à 180 degrés : FTM1 déjà cité

### Fluage statique : FTM8 déjà cité

### SAFT (shear adhesion failure temperature)

Le test SAFT (ASTM D4498) mesure la capacité d'un HMPSA à résister à une force statique de 0.5 kgf, sous l'effet d'une montée régulière en température de 0.4°C/min.

Le SAFT est défini par la température à laquelle on peut observer une séparation par glissement vertical parallèle d'une aire de 25 x 25 mm² enduite de HMPSA, d'une plaque d'acier inoxydable plane.

Le HMPSA est enduit entre 140 et 180°C sur une bande de PET de 25 x 400 mm². L'épaisseur étant constante, le grammage est compris entre 18 et 22 g/m². Les bandes à tester doivent être conditionnées au moins 4 heures avant l'essai dans une pièce climatisée à (23 ± 2)°C, (50 ± 5)% HR. Le ruban auto-adhésif est appliqué à l'aide d'un rouleau standard normalisé de 2 kg.

Le résultat du SAFT est donné en °C. Le type de rupture doit être mentionné.

### Tack au doigt (méthode interne)

Ce test donne une idée immédiate de l'adhérence d'un HMPSA enduit sur un support en PET. La valeur de tack au doigt est comprise entre 0 et 3.
0 : tack nul,
1 : tack insuffisant,
2 : bon tack,
3 : tack excellent.

### Tack à la boucle (loop tack) défini plus haut (FTM9)

On a utilisé les produits suivants :
KRATON : copolymère bloc à base de styrène et d'isoprène contenant 15 % en poids de polystyrène de type linéaire produit par SHELL sous la référence KRATON D1161N
LOTRYL : copolymère éthylène-acrylate de n-butyle contenant 35 % en poids d'acrylate et de MFI 320 g/10 mn à 190°C sous 2,16 kg selon ASTM D 1238-73 conditions E (produit par ELF ATOCHEM)
PERMALYN 5095 : ester de glycérol de colophane solide (produit par HERCULES)
DERTOLINE DEG 2 ester de colophane diéthylèneglycol semi liquide (produit par DRT)
CATENEX N 956 huile paraffinique aliphatique (produite par SHELL)
IRGANOX 1010 antioxydant phénolique (produit par CIBA SPECIALITY CHEMICALS).

Les adhésifs ont été formulés selon les proportions (en poids):
35 parties d'un mélange KRATON D 1161 N / LOTRYL
45 parties PERMALYN 5095
15 parties DERTOLINE DEG 2
5 parties CATENEX N 956
0.2 partie IRGANOX 1010.

Les résultats sont rassemblés sur les tableaux 1 et 2.

Dans ces tableaux :
s désigne l'écart type de la mesure
RA désigne la rupture adhésive,
RC désigne la rupture cohésive,
RM désigne la rupture mixte.

Les proportions de KRATON et de LOTRYL sont en parties poids.

Tg désigne la température de transition vitreuse déterminée par DSC (differential scanning calorimetry).

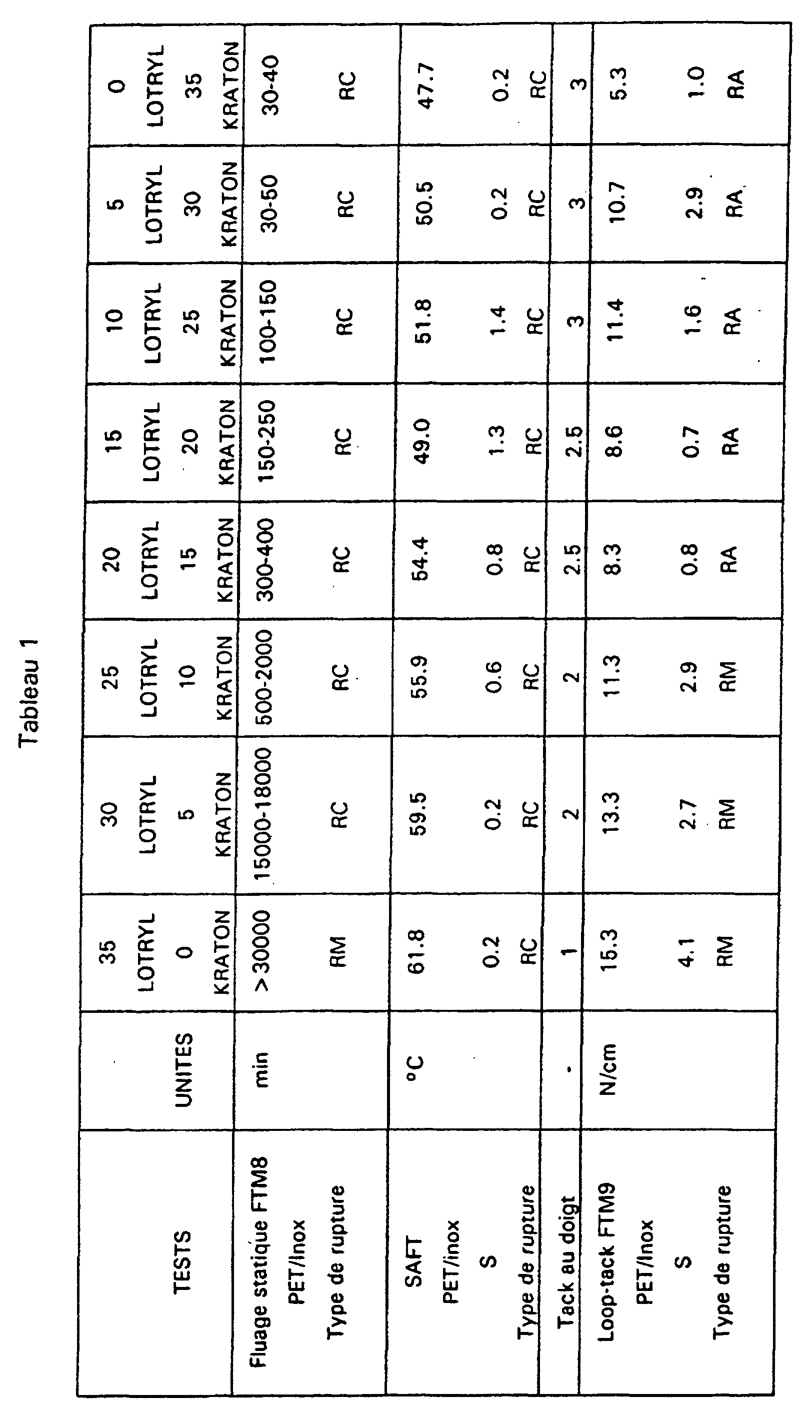

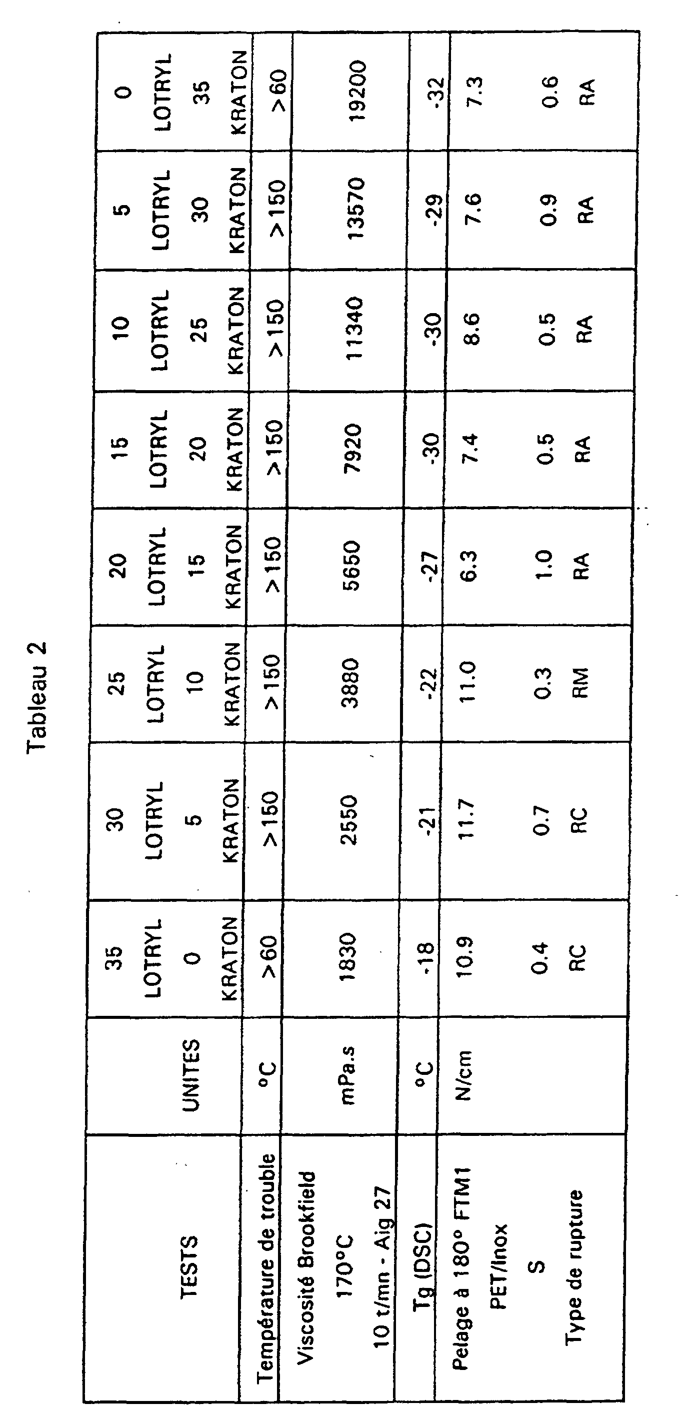

## Revendications

1. Adhésif sensible à la pression, déposé à chaud sur un substrat, comprenant :
- un mélange d'un copolymère bloc (A) comprenant des blocs polystyrène et des blocs polybutadiène ou polyisoprène éventuellement hydrogénés et d'un copolymère (B) de l'éthylène et d'un (méth)acrylate d'alkyle,
- au moins une résine tackifiante et
- un plastifiant, **caractérisé en ce que** ledit plastifiant est choisi parmi les huiles minérales paraffiniques aromatiques ou naphténiques.

2. Adhésif selon la revendication 1 **caractérisé en ce que** (B) est un copolymère de l'éthylène et de l'acrylate de n-butyle.

3. Adhésif selon l'une quelconque des revendications précédentes **caractérisé en ce que** la quantité de résine tackifiante est de 50 à 180 parties (en poids), de préférence 100 à 150 pour 100 parties du mélange de (A) et (B).

4. Adhésif selon l'une quelconque des revendications précédentes **caractérisé en ce que** la quantité de plastifiant est de 10 à 30 parties pour 100 parties du mélange de (A) et (B).

## Patentansprüche

1. Haftklebstoff, der heiß auf ein Substrat aufgebracht wird, enthaltend:
- eine Mischung aus einem Blockcopolymer (A) mit Polystyrolblöcken und gegebenenfalls hydrierten Polybutadien- oder Polyisoprenblöcken und einem Copolymer (B) von Ethylen und einem Alkyl-(meth)acrylat,
- mindestens ein klebrigmachendes Harz und
- einen Weichmacher, **dadurch gekennzeichnet, daß** der Weichmacher unter paraffinischen, aromatischen oder naphthenischen Mineralölen ausgewählt ist.

2. Klebstoff nach Anspruch 1, **dadurch gekennzeichnet, daß** es sich bei (B) um ein Copolymer von Ethylen und n-Butylacrylat handelt.

3. Klebstoff nach einem der vorhergehenden Ansprüche, **dadurch gekennzeichnet, daß** die Menge an klebrigmachendem Harz 50 bis 180 Gewichtsteile und vorzugsweise 100 bis 150 Gewichtsteile pro 100 Gewichtsteile der Mischung aus (A) und (B) beträgt.

4. Klebstoff nach einem der vorhergehenden Ansprüche, **dadurch gekennzeichnet, daß** die Weichmachermenge 10 bis 30 Gewichtsteile pro 100 Gewichtsteile der Mischung aus (A) und (B) beträgt.

## Claims

1. Pressure-sensitive adhesive, deposited while hot on a substrate, comprising:
- a mixture of a block copolymer (A) comprising polystyrene blocks and polybutadiene or polyisoprene blocks which are optionally hydrogenated and of a copolymer (B) of ethylene and of an alkyl (meth)acrylate,
- at least one tackifying resin and a plasticizer, **characterized in that** the said plasticizer is chosen from paraffinic, aromatic or naphtenic mineral oils.

2. Adhesive according to Claim 1, **characterized in that** (B) is a copolymer of ethylene and of n-butyl acrylate.

3. Adhesive according to either one of the preceding claims, **characterized in that** the amount of tackifying resin is from 50 to 180 parts (by weight), preferably 100 to 150, per 100 parts of the mixture of (A) and (B).

4. Adhesive according to any one of the preceding claims, **characterized in that** the amount of plasticizer is from 10 to 30 parts per 100 parts of the mixture of (A) and (B).
